# EUROPEAN PATENT APPLICATION

(11) **EP 4 510 327 A1**
(43) Date of publication of application: **19.02.2025**
(21) Application number: 22958498.2
(22) Date of filing: 16.09.2022
(51) Int. Cl.: H01M 50/172, H01M 50/531, H01M 50/536

(54) **BATTERY CELL, BATTERY AND ELECTRIC DEVICE**

(71) Applicant: Contemporary Amperex Technology Co., Limited, Ningde, Fujian 352100 (CN)
(72) Inventor: ZHOU, Wenlin, Ningde, Fujian 352100 (CN); ZHENG, Ting, Ningde, Fujian 352100 (CN); LI, Quankun, Ningde, Fujian 352100 (CN); WANG, Peng, Ningde, Fujian 352100 (CN)
(74) Representative: Ran, Handong
(86) International application number: PCT/CN2022/119415
(87) International publication number: WO 2024/055308

(57) **Abstract**

The present application relates to the field of batteries. Provided are a battery cell, a battery and an electric device. The battery cell comprises an electrode assembly, a support member and an electrically conductive member, wherein the electrode assembly has a body portion and a tab; in a first direction, the tab protrudes from one end of the body portion; the tab bends around the support member; in a second direction, the tab comprises a bending portion located on one side of the support member, the second direction being perpendicular to the first direction; and the electrically conductive member is connected to the tab. The tab further comprises a fixing area connected to the electrically conductive member, wherein in the first direction, the fixing area is located on the side of the support member facing away from the body portion; and in the second direction, the support member has a first end face facing the bending portion, the first end face being located between the fixing area and the bending portion. The first end face of the battery cell is located between the fixing area and the bending portion, such that the support member can have a relatively good supporting effect on the tab, and thus the tab does not easily split and insert, thereby improving the safety of the battery cell.application

## Description

### Technical Field

The present application relates to the field of battery, in particular to a battery cell, a battery, and an electrical equipment.

### Background Art

Batteries are widely used in the field of new energy, such as electric vehicles, new energy vehicles, etc. New energy vehicles and electric vehicles have become a new trend in the development of the automobile industry. The development of battery technology needs to consider multiple design factors simultaneously, such as energy density, cycle life, discharge capacity, charging and discharging rate, and other performance parameters. In addition, it is also necessary to consider the safety of the battery. However, in the scenario where the cells are inverted, the battery cell is less safe.

### Summary

The object of the embodiments of the present application is to provide a battery cell, a battery and an electrical equipment, which is intended to improve the problem of poor safety of the battery cell in a scenario where the cells are inverted in the related technology.

In the first aspect, the embodiment of the present application provides a battery cell, which includes an electrode assembly, a support member, and a conductive member, wherein the electrode assembly has a main body part and a tab, and along a first direction, the tab protrudes from one end of the main body part; the tab is bent around the support member, and along a second direction, the tab includes a bent part located on one side of the support member, wherein the second direction is perpendicular to the first direction; the conductive member is connected to the tab; the tab further includes a fixed area connected to the conductive member, and along the first direction, the fixed area is located on one side of the support member facing away from the main body part; and along the second direction, the support member has a first end face facing the bent part, and the first end face is located between the fixed area and the bent part.

In the above technical solution, the battery cell is provided therein with a support member, and the tab is bent around the support member. The fixed area of the tab connected to the conductive member is located on the side of the support member facing away from the main body part in the first direction, and the first end face is located between the fixed area and the bent part in the second direction. In the scenario of the cell being inverted, the support member can support the electrode assembly. This makes it difficult for the weight of the main body part of the electrode assembly to be transmitted to the tab, thereby enabling the support member to provide good support effect for the tab, making it difficult for the tab to fork and insert inside, and improving the safety of the battery cell.

As an optional technical solution of the embodiment of the present application, the battery cell includes a casing, an end cover, and an insulating member, wherein the casing has an opening, and the electrode assembly is accommodated within the casing; the end cover closes the opening; the insulating member is located on the side of the end cover facing the electrode assembly, and is configured to insulate and isolate the tab and the end cover; a concave part is formed on one side of the insulating member facing the electrode assembly, and the support member is at least partially accommodated within the concave part; and a gap is provided between the first end face and the side wall surface of the concave part, and the gap is configured to enable the bent part to pass through.

In the above technical solution, a concave part is formed on the side of the insulating member facing the electrode assembly, and the support member is at least partially accommodated in the concave part, so as to reduce the occupation of the internal space of the casing by the support member, which is conducive to improving the energy density of the battery cell. Due to the gap between the first end face and the side wall surface of the concave part, it is convenient for the tab to pass through the gap and wrap towards the side of the support member facing away from the main body part.

As an optional technical solution of the embodiment of the present application, along the second direction, the minimum width of the gap is A, and the thickness of the bent part is B, which meets A > B+1mm.

In the above technical solution, the difference between the minimum width of the gap along the second direction and the thickness of the bent part along the second direction is greater than or equal to 1mm. In this way, there is a sufficient gap between the first end face and the side wall surface of the concave part for the bent part to pass through, thereby making it difficult for the bent part to contact the first end face or the side wall surface of concave part, and enabling the bent part to be less susceptible to stress from the first end face or the side wall surface of concave part, which is not easy to cause damage to the tab. If A<B+1mm, the width of the gap is small, and the tab is easily affected by the stress of the first end face or the side wall surface of concave part, which can damage the tab.

As an optional technical solution of the embodiment of the present application, the battery cell includes a casing, an end cover, and an insulating member, wherein the casing has an opening, and the electrode assembly is accommodated within the casing; the end cover closes the opening; the insulating member is located on the side of the end cover facing the electrode assembly, and is configured to insulate and isolate the tab and the end cover; and in the second direction, the insulating member has a second end face, wherein the first end face is located between the fixed area and the second end face.

In the above technical solution, since the first end face is located between the fixed area and the second end face, the tab can be wound towards the side of the support member facing away from the main body part from between the first end face and second end face.

As an optional technical solution of the embodiment of the present application, along the second direction, the bent part is located between the first end face and the second end face, the distance between the first end face and the second end face is C, and the thickness of the bent part is B, which meets C ≥ B+1mm.

In the above technical solution, along the second direction, the difference between the distance between the first and second end faces and the thickness of the bent part is greater than or equal to 1mm. In this way, there is a sufficient spacing between the first and second end faces for the bent part to pass through, thereby making it difficult for the bent part to contact the first end face, and making the bent part less susceptible to stress from the first end face, which is not easy to cause damage to the tab. If C<B+1mm, the spacing between the first end face and the second end face is small, and the tab is susceptible to stress from the first end face, thereby cutting the tab.

As an optional technical solution of the embodiment of the present application, the tab further includes a first connecting part and a second connecting part, wherein the bent part connects the first connecting part and the second connecting part, the first connecting part is connected to the main body part, and along the first direction, the first connecting part and the second connecting part are respectively located on two sides of the support member; and the second connecting part has the fixed area connected to the conductive member.

In the above technical solution, the first connecting part is the root part of the tab, which is a part of the tab closest to the main body part. Through the transition of the bent part, the second connecting part can extend to the side of the support member facing away from the main body part. In the scenario of the cell being inverted, the support member can support the main body part, thereby making it difficult for the weight of the main body part to be transmitted to the second connecting part, making it difficult for the tab to fork and insert inside, and improving the safety of the battery cell.

As an optional technical solution of the embodiment of the present application, the electrode assembly has two tabs, wherein the two tabs are bent respectively around two sides of the support member along the second direction.

In the above technical solution, by bending the two tabs around two sides of the support member respectively, one support member can shape the two tabs located on both sides of the support member, thereby making both tabs less prone to forking and inserting, and improving the safety of the battery cell.

As an optional technical solution of the embodiment of the present application, the battery cell includes a casing and an end cover, wherein the casing has an opening, and the electrode assembly is accommodated within the casing; and the end cover closes the opening, and the end cover is the conductive member.

In the above technical solution, the end cover is the conductive member, and the tab is directly electrically connected to the end cover, thereby outputting or inputting the electrical energy of the battery cell through the end cover.

As an optional technical solution of the embodiment of the present application, the battery cell includes a casing, an end cover, and an electrode terminal, wherein the casing has an opening, and the electrode assembly is accommodated within the casing; the end cover closes the opening; and the electrode terminal is arranged on the end cover, and the electrode terminal is the conductive member.

In the above technical solution, the electrode terminal is the conductive member, and the tab is connected to the electrode terminal to output or input the electrical energy of the battery cell through the electrode terminal.

As an optional technical solution of the embodiment of the present application, the battery cell comprises a casing, an end cover, an electrode terminal, and a current collector component, wherein the casing has an opening, and the electrode assembly is accommodated within the casing; the end cover closes the opening; the electrode terminal is arranged on the end cover; and the current collector component is electrically connected to the electrode terminal, and the current collector component is the conductive member.

In the above technical solution, the current collector component is a conductive member, with the tab connected to the current collector component and the current collector component connected to the electrode terminal, which outputs or inputs the electrical energy of the battery cell through the electrode terminal.

As an optional technical solution of the embodiment of the present application, the support member abuts against the main body part.

In the above technical solution, by abutting the support member against the main body part, on the one hand, there is no gap between the support member and the main body part, which is conducive to fully utilizing the internal space of the battery cell and improving the energy density of the battery cell. On the other hand, during the process of switching the cell from upright to inverted, the relative position between the support member and the main body part will not change, and the main body part will not collide with the support member, which is less likely to cause damage to the electrode assembly and is beneficial for improving the lifespan of the battery cell.

As an optional technical solution of the embodiment of the present application, the support member has a body part, a connecting part, and a wing part, wherein the body part abuts against the main body part, the tab is bent around the wing part, the connecting part connects the body part and the wing part, and along the first direction, the surface of the wing part facing the main body part is further away from the main body part compared to the surface of the body part facing the main body part.

In the above technical solution, by bending the tab of the electrode assembly around the wing part, in the scenario of the cell being inverted, the body part supports the main body part of the electrode assembly, thereby making it difficult for the weight of the main body part of the electrode assembly to be transmitted to the tab, making it difficult for the tab to fork and insert inside, and improving the safety of the battery cell. Since along the thickness direction of the end cover, the surface of the wing part facing the main body part is further away from the main body part compared to the surface of the body part facing the main body part, there is an accommodating space formed between the wing part and the main body part, which is configured for the tab to extend out, so as to make a good shaping effect on the tab, thereby making it difficult for the tab to fork and insert inside, and improving the safety of the battery cell.

As an optional technical solution of the embodiment of the present application, the tab further includes a first connecting part and a second connecting part, wherein the bent part connects the first connecting part and the second connecting part, the first connecting part is connected to the main body part, and along the first direction, the first connecting part and the second connecting part are respectively located on two sides of the support member; the second connecting part has the fixed area connected to the conductive member; and in the second direction, along the direction from the bent part towards the support member, the second connecting part does not exceed a connection position between the body part and the connecting part.

In the above technical solution, since the body part is connected to the wing part by the connecting part, there is a height difference between the surface of the body part facing away from the main body part and the surface of the wing part facing away from the main body part. If, along the second direction, the second connecting part extends beyond the connection position between the body part and the connecting part along the direction in which the bent part points toward the support member, the second connecting part is susceptible to bending, thereby increasing the risk of damage to the second connecting part.

In the second aspect, the embodiment of the present application also provides a battery, wherein the battery includes a box and the battery cell mentioned above, and the battery cell is accommodated within the box.

In the third aspect, the embodiment of the present application also provides an electrical equipment, which includes the battery mentioned above, and the battery is configured to provide electrical energy.

### Brief Description of Drawings

In order to more clearly illustrate technical solutions of embodiments of the present application, drawings required for use in the embodiments will be described briefly below. It should be understood that the following drawings are merely illustrative of some embodiments of the present application, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present application;
FIG. 2 is an exploded view of the battery provided in some embodiments of the present application;
FIG. 3 is an exploded view of the battery cell provided in some embodiments of the present application;
FIG. 4 is a schematic view of a structure of the battery cell provided in some embodiments of the present application;
FIG. 5 is a schematic top view of the battery cell provided in some embodiments of the present application;
FIG. 6 is a sectional view at position D-D shown in FIG. 5;
FIG. 7 is a sectional view at position E-E shown in FIG. 6;
FIG. 8 is a schematic top view of the battery cell provided in some other embodiments of the present application;
FIG. 9 is a sectional view at position F-F shown in FIG. 8;
FIG. 10 is a sectional view at position G-G shown in FIG. 9;
FIG. 11 is a schematic top view of the battery cell provided in some other embodiments of the present application;
FIG. 12 is a sectional view at position H-H shown in FIG. 11;
FIG. 13 is a sectional view at position I-I shown in FIG. 12;
FIG. 14 is a schematic view of the front-side structure of the battery cell provided in some embodiments of the present application; and
FIG. 15 is a schematic view of the reverse-side structure of the battery cell provided in some embodiments of the present application.

Reference signs: 10-box; 11-first part; 12-second part; 20-battery cell; 211-end cover; 212-liquid injection hole; 213-electrode terminal; 214-pressure relief mechanism; 215-insulating member; 2151-concave part; 2152-side wall surface; 2153-second end face; 22-electrode assembly; 221-main body part; 222-tab; 2221-first connecting part; 2222-bent part; 2223-second connecting part; 22231-fixed area; 23-casing; 24-support member; 241-body part; 242-connecting part; 243-wing part; 244-liquid injection platform; 2441-through hole; 2431-first end face; 25-current collector component; 100-battery; 200-controller; 300-motor; and 1000-vehicle.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprise/include", "provide", and any variations thereof in the description and claims, as well as the brief description of the drawings described above of the present application are intended to cover non-exclusive inclusions. The terms "first", "second", etc. in the description and the claims of the present application or the drawings are used to distinguish different objects, rather than describing specific sequences or primary and secondary relationships.

In the present application, the phrase "embodiment" mentioned means that the specific features, structures, or characteristics described with reference to the embodiments may be encompassed in at least one embodiment of the present application. The phrase at various locations in the description does not necessarily refer to the same embodiment, or an independent or alternative embodiment exclusive of another embodiment.

In the description of the present application, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present application may be understood according to specific circumstances.

The term "and/or" in the present application is only a description for the association relationship of the associated object, indicating that there can be three types of relationships. For example, A and/or B can indicate three conditions: the presence of only A, the presence of both A and B, and the presence of only B. In addition, the character "/" in the present application generally indicates that the associated objects before and after have an "or" relationship.

In the embodiments of the present application, the same reference signs represent the same components, and for simplicity, detailed descriptions for the same components are omitted in different embodiments. It should be understood that the thickness, length, width, and other dimensions of various components in the embodiments of the present application shown in the drawings, as well as the overall thickness, length, width, and other dimensions of the integrated device, are only illustrative examples and should not constitute any limitations to the present application.

The term "multiple (a plurality of)" in the present application refers to two or more (including two).

In the present application, the battery cell can include a lithium ion secondary battery cell, a lithium ion primary battery cell, a lithium sulfur battery cell, a sodium lithium ion battery cell, a sodium ion battery cell or a magnesium ion battery cell, etc., which is not limited by the embodiments of the present application. The battery cell can be cylindrical, flat, or rectangular, or be of other shapes, which is also not limited by the embodiments of the present application. Battery cells are generally divided into three types according to the packaging method: cylindrical battery cell, square battery cell, and soft pack battery cell, which is also not limited by the embodiments of the present application.

The battery mentioned in the embodiments of the present application refers to a single physical module that includes one or more battery cells to provide higher voltage and capacity. For example, the batteries mentioned in the present application may include battery modules or battery packs, etc. The battery generally includes a box used to encapsulate one or more battery cells. The box can prevent liquids or other foreign objects from affecting the charging or discharging of battery cells.

The battery cell includes an electrode assembly and an electrolyte, and the electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector, and the positive electrode current collector without the positive electrode active substance layer protrudes from the positive electrode current collector coated by the positive electrode active substance layer. The positive electrode current collector without the positive electrode active substance layer is used as the positive sub-tab. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector, and the negative electrode current collector without the negative electrode active substance layer protrudes from the negative electrode current collector coated by the negative electrode active substance layer. The negative electrode current collector without the negative electrode active substance layer is used as the negative sub-tab. The material for the negative electrode current collector can be copper, and the active substance of the negative electrode can be carbon, silicon or the like. In order to ensure that fusing does not occur under a high current, multiple positive sub-tabs are provided and stacked together, and multiple negative sub-tabs are provided and stacked together. The material of the separator can be PP (polypropylene) or PE (polyethylene), etc. In addition, the electrode assembly can be of a wound structure or a laminated structure (stacked structure), which is not limited by the embodiments of the present application.

At present, based on the development of the market situation, the application of batteries is becoming increasingly widespread. Batteries are not only used in energy storage power systems such as hydropower, firepower, wind power, and solar power plants, but also widely used in electric vehicles such as electric bicycles, electric motorcycles, and electric cars, as well as in various fields such as military equipment and aerospace. With the continuous expansion of battery application fields, the market demand is also constantly expanding.

The development of battery technology needs to consider multiple design factors simultaneously, such as energy density, cycle life, discharge capacity, charging and discharging rate, and other performance parameters. In addition, it is also necessary to consider the safety of the battery. However, in the scenario where the cells are inverted, the battery cell is less safe.

The inventor further studied and found that the battery cell includes the electrode assembly, which is the component in the battery cell that undergoes electrochemical reactions. The electrode assembly is mainly formed by winding or stacking the positive and negative electrode plates, and usually has a separator between the positive and negative electrode plates. The portion of the positive electrode plate and the portion of the negative electrode plate, having an active substance, constitute the main body part of the electrode assembly, and the portion of the positive electrode plate and the portion of the negative electrode plate without an active substance each constitute a sub-tab, and in order to ensure that a high current can be passed without fusing, multiple sub-tabs are provided and stacked together to form a tab. In a scenario where the cell is inverted, the tab is located below the main body part, and the tab is subjected to the action of gravity from the main body part. Since the tab is formed by stacking multiple sub-tabs together, the tab is prone to forking under the action of gravity. The forked parts are easily inserted into the main body part and in contact with the positive or negative electrode plates in the main body part, resulting in short circuits. In severe cases, it can cause fire or even explosion, thereby leading to poor safety of the battery cell.

In view of this, the embodiment of the present application provides a battery cell, which includes an electrode assembly, a support member, and a conductive member. The electrode assembly has a main body part and a tab, and along the first direction, the tab protrudes from one end of the main body part. The tab is bent around the support member. In the second direction, the tab includes a bent part located on one side of the support member. The second direction is perpendicular to the first direction. The conductive member is connected to the tab. The tab also includes a fixed area connected to the conductive member. Along the first direction, the fixed area is located on the side of the support member facing away from the main body part. Along the second direction, the support member has a first end face facing the bent part, and the first end face is located between the fixed area and the bent part.

The battery cell is provided therein with a support member, and the tab is bent around the support member. The fixed area of the tab connected to the conductive member is located on the side of the support member facing away from the main body part in the first direction, and the first end face is located between the fixed area and the bent part in the second direction, so that the support member can provide good support effect for the tab. Moreover, in the scenario of the cell being inverted, the support member can play a supporting role on the electrode assembly, thereby making it difficult for the weight of the main body part of the electrode assembly to be transmitted to the tab, making it difficult for the tab to fork and insert inside, and improving the safety of the battery cell.

The technical solution described in the embodiments of the present application is applicable to batteries and electrical equipment using batteries.

The electrical equipment can be a vehicle, a mobile phone, a portable device, a notebook computer, a ship, a spacecraft, an electric toy, an electric tool, and the like. The spacecraft includes an aircraft, a rocket, a space shuttle, a spacecraft, and the like. The electric toys include a stationary or mobile electric toy, such as a game console, an electric vehicle toy, an electric ship toy, an electric airplane toy, and the like. The electric tools include a metal cutting electric tool, a grinding electric tool, an assembly electric tool, and an electric tool for railways, such as an electric drill, an electric grinder, an electric wrench, an electric screwdriver, an electric hammer, an electric impact drill, a concrete vibrator, and an electric planer. The foregoing electrical equipment is not specially limited in the embodiment of the present application.

For ease of description, the following embodiments will be described by taking an electrical equipment being a vehicle 1000 as an example.

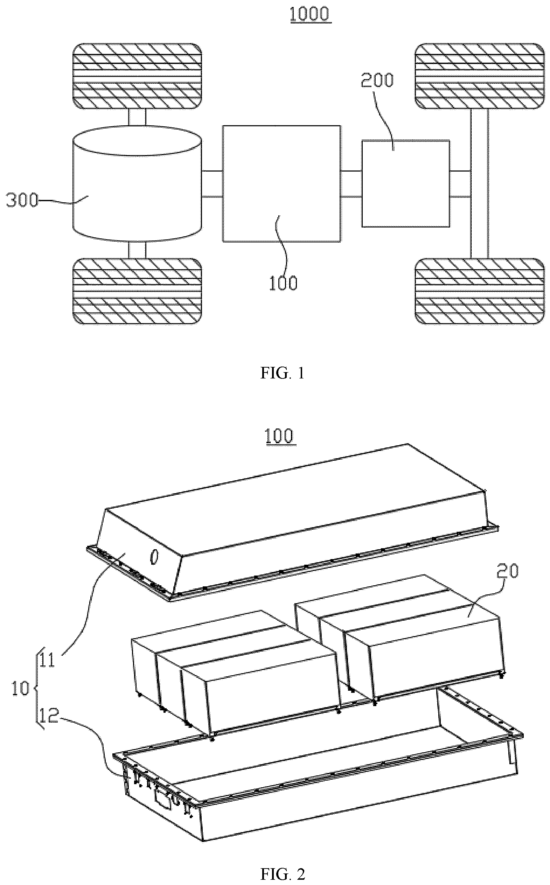

Referring to FIG. 1, FIG. 1 is a structural schematic view of the vehicle 1000 provided in some embodiments of the present application. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000. The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present application, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery 100 provided in some embodiments of the present application. The battery 100 includes a box 10 and a battery cell 20, which is accommodated within the box 10. In the above, the box 10 is used to provide storage space for the battery cell 20, and the box 10 can be of various structures. In some embodiments, the box 10 may include a first part 11 and a second part 12, with the first part 11 and the second part 12 covering each other. The first part 11 and the second part 12 jointly define an accommodating space for accommodating the battery cell 20. The second part 12 can be in a hollow structure with an opening at one end, the first part 11 can be in a plate-shaped structure, and the first part 11 is covered on the opening side of the second part 12 to jointly define the accommodating space by the first part 11 and the second part 12. The first part 11 and the second part 12 can also both be in hollow structure with an opening on one side, and the opening side of the first part 11 is covered on the opening side of the second part 12. Of course, the box 10 formed by the first part 11 and the second part 12 can be of various shapes, such as cylinder, cuboid, etc.

In the battery 100, the battery cells 20 can be multiple, and multiple battery cells 20 can be connected in series, parallel, or hybrid. Hybrid connection means that both series connection and parallel connection exist among multiple battery cells 20. Multiple battery cells 20 can be directly connected in series, parallel, or hybrid together, and then the whole composed of multiple battery cells 20 can be accommodated in the box 10. Of course, the battery 100 can also be in the form of a battery module composed of multiple battery cells 20 that are first connected in series, parallel, or hybrid. Multiple battery modules are then connected in series, parallel, or hybrid to form a whole and accommodated in the box 10. The battery 100 may also include other structures, for example, the battery 100 may also include a busbar component for achieving electrical connection between multiple battery cells 20.

In the above, each battery cell 20 can be a secondary battery cell or a primary battery cell; and can also be a lithium sulfur battery cell, sodium ion battery cell, or magnesium ion battery cell, but is not limited thereto. The battery cell 20 can be cylindrical, flat, or rectangular, or be of other shapes.

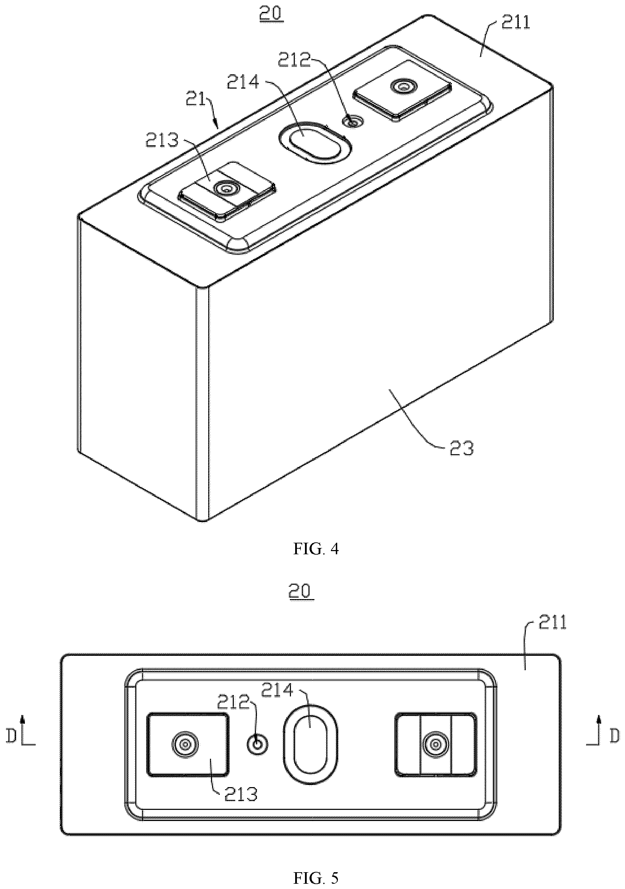

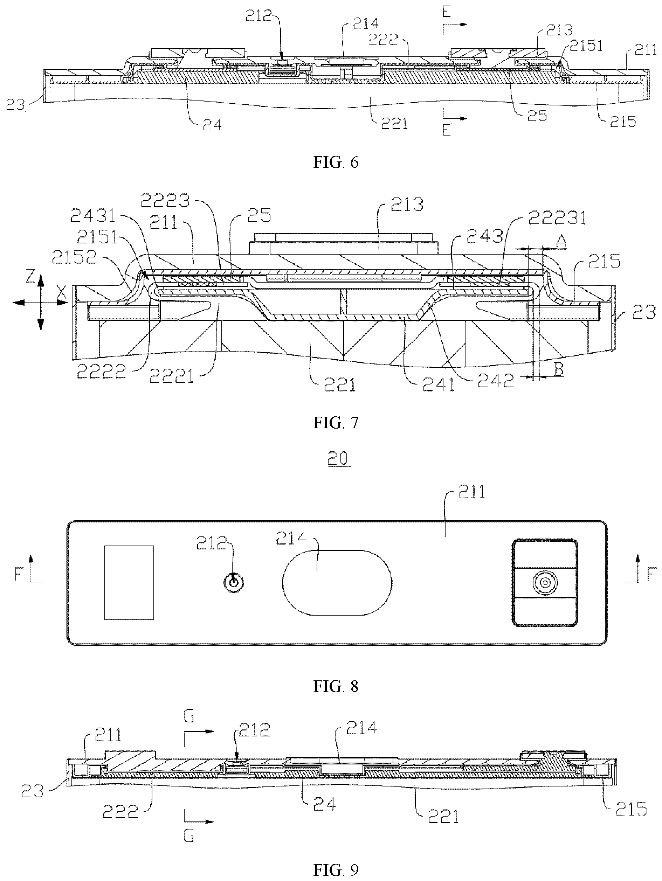

Referring to FIGS. 3, 4, 5, 6 and 7, FIG. 3 is an exploded view of the battery cell 20 provided in some embodiments of the present application. FIG. 4 is a schematic view of a structure of the battery cell 20 provided in some embodiments of the present application. FIG. 5 is a schematic top view of the battery cell 20 provided in some embodiments of the present application. FIG. 6 is a sectional view at position D-D shown in FIG. 5. FIG. 7 is a sectional view at position E-E shown in FIG. 6. The embodiment of the present application provides a battery cell 20, which includes an electrode assembly 22, a support member 24, and a conductive member. The electrode assembly 22 has a main body part 221 and a tab 222, and along the first direction, the tab 222 protrudes from one end of the main body part 221. The tab 222 is bent around the support member 24. In the second direction, the tab 222 includes a bent part 2222 located on one side of the support member 24, and the second direction is perpendicular to the first direction. The conductive member is connected to the tab 222. The tab 222 also includes a fixed area 22231 connected to the conductive member. In the first direction, the fixed area 22231 is located on the side of the support member 24 facing away from the main body part 221. Along the second direction, the support member 24 has a first end face 2431 facing the bent part 2222, and the first end face 2431 is located between the fixed area 22231 and the bent part 2222.

The electrode assembly 22 is a component in the battery cell 20 that undergoes electrochemical reactions. The shell 23 may contain one or more electrode assemblies 22. The electrode assembly 22 is mainly formed by winding or stacking the positive and negative electrode plates, and usually has a separator between the positive and negative electrode plates. The parts of the positive and negative electrode plates that contain active substance form the main body part 221 of the electrode assembly 22, and the parts of the positive and negative electrode plates that do not contain active substance each form the sub-tabs. In order to ensure that fusing does not occur under a high current, multiple sub-tabs are provided and stacked together to form a tab 222. The positive and negative electrode tabs can be located at one end of the main body part 221 together or at both ends of the main body part 221, respectively. In this embodiment, both the positive and negative electrode tabs protrude from one end of the main body part in the first direction. During the charging and discharging process of the battery 100, the positive and negative active substances react with the electrolyte, and the tab 222 is connected to the conductive member to form a current circuit. The tab 222 protrudes from the main body part 221 to facilitate connection with the conductive member, thereby directly or indirectly outputting electrical energy from the battery cell 20 or inputting electrical energy to the battery cell 20.

The tab 222 protrudes from one end of the main body part 221 in the first direction, and as shown in FIG. 7, the first direction can be the Z direction in the figure. Optionally, the first direction can be the thickness direction of the support member 24.

The support member 24 is located inside the casing 23 and between the end cover 211 and the main body part 221. It should be noted that the side of the end cover 211 facing the main body part 221 can be provided with a concave part 2151, and the support member 24 can be partially or fully accommodated within the concave part 2151, which also means that the support member 24 is located between the end cover 211 and the main body part 221. In the scenario where the cell is inverted, the support member 24 can support the main body part 221, thereby making it difficult for the weight of the main body part 221 to be transmitted to the tab 222.

The support member 24 is a component capable of supporting at least a portion of the tab 222 to achieve shaping for the tab 222. In the scenario of the cell being inverted, the support member 24 can still play a supporting role on the main body part 221.

The "tab 222 bent around the support member 24" refers to the tab 222 forming a bend at the edge of the support member 24 starting from the side near the main body part 221 and extending to the side of the support member 24 facing away from the main body part 221.

It should be noted that in the embodiment of the present application, the tab 222 is bent around the support member 24, which can be that the positive electrode tab is bent around the support member 24, the negative electrode tab is bent around the support member 24, or both the positive electrode tab and negative electrode tab are bent around the support member 24. The tab 222 is bent around the support member 24, and the tab 222 can be in contact with the end portion of the support member 24 or not.

The second direction is perpendicular to the first direction, and as shown in FIG. 7, the second direction can be the X direction shown in the figure. Optionally, the second direction can be the width direction of the support member 24.

The bent part 2222 is a part where the tab 222 forms a bend at the edge of the support member 24, and the existence of the bent part 2222 enables the tab 222 to bend around the support member 24.

A conductive member is a component that is directly connected to the tab 222 and has conductivity. It is possible to output electrical energy from the battery cell 20 or input electrical energy to the battery cell 20 directly or indirectly through conductive member.

The fixed area 22231 is the area where the tab 222 is connected to the conductive member. The connection between the tab 222 and the conductive member can be welded connection, and at this time, the fixed area 22231 is the welded area between the tab 222 and the conductive member. The fixed area 22231 is located on the side of the support member 24 facing away from the main body part 221 in the first direction, or the support member 24 is located between the fixed area 22231 and the main body part 221 in the first direction.

The first end face 2431 is the surface of the support member 24 closest to the bent part 2222 in the second direction. When the first end face 2431 is located between the fixed area 22231 and the bent part 2222 in the second direction, there is a gap between the first end face 2431 and the fixed area 22231 in the second direction, and the projection of the fixed area 22231 on the support member 24 in the first direction is located within the support member 24.

The battery cell 20 is provided therein with a support member 24, and the tab 222 is bent around the support member 24. The fixed area 22231 of the tab 222 connected to the conductive member is located on the side of the support member 24 facing away from the main body part 221 in the first direction, and the first end face 2431 is located between the fixed area 22231 and the bent part 2222 in the second direction. In the scenario of the cell being inverted, the support member 24 can support the electrode assembly 22. This makes it difficult for the weight of the main body part 221 of the electrode assembly 22 to be transmitted to the tab 222, thereby enabling the support member 24 to provide good support effect for the tab 222, making it difficult for the tab 222 to fork and insert inside, and improving the safety of the battery cell 20.

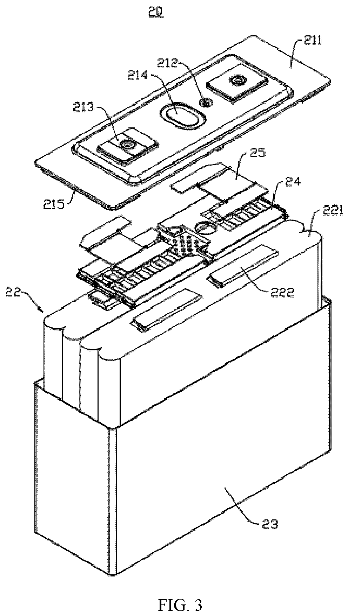

Refer to FIGS. 3, 4, 5, 6, and 7. In some embodiments, the battery cell 20 includes a casing 23, an end cover 211, and an insulating member 215. The casing 23 has an opening, the electrode assembly 22 is accommodated within the casing 23, and the end cover 211 closes the opening. The insulating member 215 is located on the side of the end cover 211 facing the electrode assembly 22, and is configured to insulate and isolate the tab 222 and the end cover 211. The insulating member 215 has a concave part 2151 on one side facing the electrode assembly 22, and the support member 24 is at least partially accommodated within the concave part 2151. There is a gap between the first end face 2431 and the side wall surface 2152 of the concave part 2151, which is used for the bent part 2222 to pass through.

The end cover 211 refers to a component that covers the opening of the casing 23 to isolate the internal environment of the battery cell 20 from the external environment. Without limitation, the shape of the end cover 211 can adapt to the shape of the casing 23 to fit the casing 23. Optionally, the end cover 211 can be made of a material with a certain hardness and strength (such as aluminum alloy), so that the end cover 211 is less prone to deformation when subjected to compression and collision, thereby enabling the battery cell 20 to have higher structural strength and improved safety performance. The material of the end cover 211 can also be various, such as copper, iron, aluminum, stainless steel, aluminum alloy, plastic, etc. The embodiments of the present application do not make special limitations on this. Optionally, the battery cell 20 also includes a pressure relief mechanism 214, which is arranged on the end cover 211. The pressure relief mechanism 214 is used to operate when the internal pressure or temperature of the battery cell 20 reaches the detonation pressure, so as to release the internal pressure of the battery cell 20.

The casing 23 is a component used to cooperate with the end cover 211 to form an internal environment of the battery cell 20, wherein the formed internal environment can be used to accommodate the electrode assembly 22, electrolyte, and other components. The casing 23 and the end cover 211 can be independent components, the opening can be set on the casing 23, and the internal environment of the battery cell 20 can be formed by making the end cover 211 cover on the opening at the opening. Without limitation, it is also possible to integrate the end cover 211 and the casing 23. Specifically, the end cover 211 and the casing 23 can form one common connection surface before other components enter the casing. When it is necessary to encapsulate the interior of the casing 23, the end cover 211 can then cover the casing 23. The casing 23 can be of various shapes and sizes, such as a cuboid, cylinder, hexagonal prism, etc. Specifically, the shape of casing 23 can be determined based on the specific shape and size of electrode assembly 22. The material of casing 23 can be various, such as copper, iron, aluminum, stainless steel, aluminum alloy, plastic, etc. The embodiments of the present application do not make special limitations on this.

The insulating member 215 is arranged on the inner side of the end cover 211, and can be used to isolate the tab 222 from the end cover 211 to reduce the risk of short circuits. For example, the insulating member 215 can be made of plastic, rubber, or the like.

The end cover 211 can has a groove on one side facing the electrode assembly 22, and the insulating member 215 is at least partially accommodated in the groove. The insulating member 215 has a concave part 2151 on one side facing the electrode assembly 22, and the support member 24 is at least partially accommodated within the concave part 2151. The end cover 211 has a convex part on one side facing away from the electrode assembly 22, and the position of the convex part corresponds to the position of the groove. Optionally, the insulating member 215 has a protrusion at a position corresponding to the groove, the protrusion is partially accommodated within the groove, and a concave part 2151 is formed inside the protrusion.

A gap is formed between the first end face 2431 and the side wall surface 2152 of the concave part 2151 for the bent part 2222 to pass through, thereby avoiding the first end face 2431 from abutting against the side wall surface 2152 of the concave part 2151 so that the tab 222 cannot bend around the support member 24.

The concave part 2151 is formed on the side of the insulating member 215 facing the electrode assembly 22, and the support member 24 is at least partially accommodated in the concave part 2151, so as to reduce the occupation of the internal space of the casing 23 by the support member 24, which is conducive to improving the energy density of the battery cell 20. Due to the gap between the first end face 2431 and the side wall surface 2152 of the concave part 2151, it is convenient for the tab 222 to pass through the gap and wrap towards the side of the support member 24 facing away from the main body part 221.

In some embodiments, along the second direction, the minimum width of the gap is A, and the thickness of the bent part is B, which meets A≥B+1mm.

The minimum width of the gap refers to a minimum distance between the first end face 2431 and the side wall surface 2152 of the concave part 2151 along the second direction. Referring to FIG. 7, the side wall surface 2152 of the concave part 2151 is an arc-shaped surface. From the upper end of the side wall surface 2152 to the lower end of the side wall surface 2152, the distance between the side wall surface 2152 and the first end face 2431 gradually increases in the second direction. At this time, the minimum width of the gap refers to the distance between the second end face 2153 and the upper end of the side wall surface 2152 in the second direction.

The thickness of the bent part 2222 in the second direction refers to the distance between the surface of the bent part 2222 facing the first end face 2431 and the surface of the bent part 2222 facing away from the first end face 2431 in the second direction.

The difference between the minimum width of the gap along the second direction and the thickness of the bent part 2222 along the second direction is greater than or equal to 1mm. In this way, there is a sufficient gap between the first end face 2431 and the side wall surface 2152 of the concave part 2151 for the bent part 2222 to pass through, thereby making it difficult for the bent part 2222 to contact the first end face 2431 or the side wall surface 2152 of concave part 2151, and enabling the bent part 2222 to be less susceptible to stress from the first end face 2431 or the side wall surface 2152 of concave part 2151, which is not easy to cause the shedding of active substances or cause damage to the tab 222. If A<B+1mm, the width of the gap is small, and the tab 222 is easily affected by the stress of the first end face 2431 or the side wall surface 2152 of concave part 2151, which can damage the tab 222.

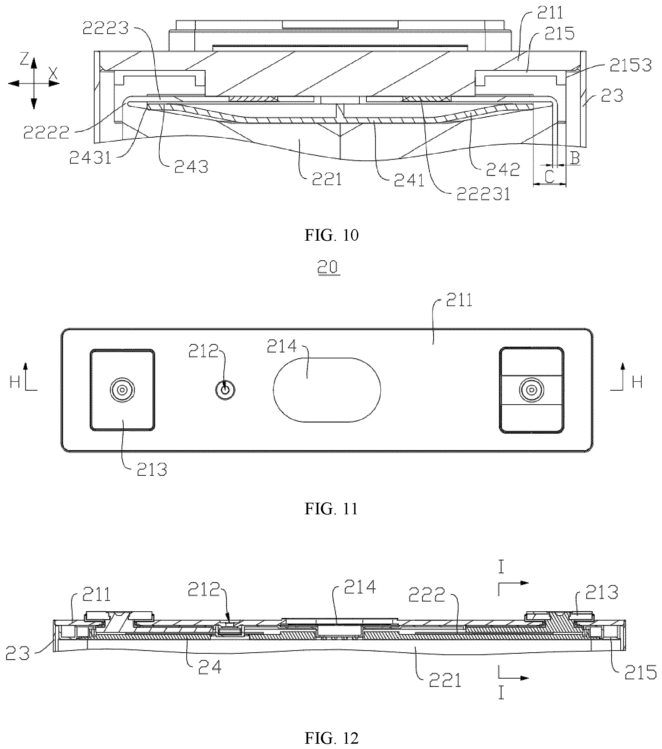

Referring to FIGS. 8, 9 and 10, FIG. 8 is a schematic top view of the battery cell 20 provided in some other embodiments of the present application. FIG. 9 is a sectional view at position F-F shown in FIG. 8. FIG. 10 is a sectional view at position G-G shown in FIG. 9. In some other embodiments, the battery cell 20 includes a casing 23, an end cover 211, and an insulating member 215. The casing 23 has an opening, the electrode assembly 22 is accommodated within the casing 23, and the end cover 211 closes the opening. The insulating member 215 is located on the side of the end cover 211 facing the electrode assembly 22, and is configured to insulate and isolate the tab 222 and the end cover 211. In the second direction, the insulating member 215 has a second end face 2153, and the first end face 2431 is located between the fixed area 22231 and the second end face 2153.

The second end face 2153 is the end face of one end of the insulating member 215 in the second direction. In the second direction, along a direction from the fixed area 22231 towards the bent part 2222, the second end face 2153 extends beyond the first end face 2431, so that the first end face 2431 is located between the fixed area 22231 and the second end face 2153.

Since the first end face 2431 is located between the fixed area 22231 and the second end face 2153, the tab 222 can be wound towards the side of the support member 24 facing away from the main body part 221 from between the first end face 2431 and second end face 2153.

In some embodiments, along the second direction, the bent part 2222 is located between the first end face 2431 and the second end face 2153. The distance between the first end face 2431 and the second end face 2153 is C, and the thickness of the bent part 2222 is B, which meets C≥B+1mm.

C represents the distance between the first end face 2431 and the second end face 2153 in the second direction.

From C≥B+1mm, it can be inferred that C-B≥1mm. That is, along the second direction, the difference between the distance between the first end face 2431 and the second end face 2153 and the thickness of the bent part 2222 is greater than or equal to 1mm.

Along the second direction, the difference between the distance between the first end face 2431 and second end face 2153 and the thickness of the bent part 2222 is greater than or equal to 1mm. In this way, there is a sufficient spacing between the first end face 2431 and second end face 2153 for the bent part 2222 to pass through, thereby making it difficult for the bent part 2222 to contact the first end face 2431, and making the bent part 2222 less susceptible to stress from the first end face 2431, which is not easy to cause the shedding of active substances or cause damage to the tab 222. If C<B+1mm, the spacing between the first end face 2431 and the second end face 2153 is small, and the tab 222 is susceptible to stress from the first end face 2431, thereby cutting the tab 222.

Refer again to FIGS. 3, 4, 5, 6, and 7. In some embodiments, the tab 222 also includes a first connecting part 2221 and a second connecting part 2223, the bent part 2222 connects the first connecting part 2221 and the second connecting part 2223, and the first connecting part 2221 is connected to the main body part 221. In the first direction, the first connecting part 2221 and the second connecting part 2223 are respectively located on two sides of the support member 24. The second connecting part 2223 has the fixed area 22231 connected to the conductive member.

The first connecting part 2221 is a part of the tab 222 located between the main body part 221 and the support member 24 in the first direction. The first connecting part 2221 is connected to the main body part 221, and the first connecting part 2221 can also be understood as the root part of the tab 222. The second connecting part 2223 is a part of the tab 222 located on the side of the support member 24 facing away from the main body part 221 in the first direction. The second connecting part 2223 is connected to the conductive member, and the fixed area 22231 is provided on the second connecting part 2223. The first connecting part 2221 and the second connecting part 2223 are connected by the bent part 2222.

The first connecting part 2221 is the root part of the tab 222, which is a part of the tab 222 closest to the main body part 221. Through the transition of the bent part 2222, the second connecting part 2223 can extend to the side of the support member 24 facing away from the main body part 221. In the scenario of the cell being inverted, the support member 24 can support the main body part 221, thereby making it difficult for the weight of the main body part 221 to be transmitted to the second connecting part 2223, making it difficult for the tab 222 to fork and insert inside, and improving the safety of the battery cell 20.

Refer to FIGS. 3, 4, 5, 6, and 7. In some embodiments, the electrode assembly 22 has two tabs 222, which are bent respectively around both sides of the support member 24 in the second direction.

Along the second direction, two tabs 222 are located respectively on both sides of the support member 24, and both tabs 222 are bent around the support member 24.

In some embodiments, along the second direction, the two opposite tabs 222 located on both sides of the support member 24 are both positive electrode tabs or both negative electrode tabs. That is, along the second direction, the polarity of the two opposite tabs 222 located on both sides of the support member 24 is the same.

By bending the two tabs 222 around two sides of the support member 24 respectively, one support member 24 can shape the two tabs 222 located on both sides of the support member 24, thereby making both tabs 222 less prone to forking and inserting, and improving the safety of the battery cell 20.

In some embodiments, along the third direction, the electrode assembly 22 includes two tabs 222 arranged at intervals, both of which are bent around the support member 24. The first, second, and third directions are perpendicular to each other. The two tabs 222 spaced apart along the third direction have opposite polarities. If one of them is a positive electrode tab, then the other is a negative electrode tab.

Refer to FIGS. 8, 9, and 10. In some embodiments, the battery cell 20 includes a casing 23 and an end cover 211. The casing 23 has an opening, the electrode assembly 22 is accommodated within the casing 23, and the end cover 211 closes the opening. The end cover 211 is the conductive member.

The end cover 211 can form a protruding structure protruding towards the electrode assembly 22 to facilitate the connection of the tab 222 to the protruding structure and to electrically connect the tab 222 to the end cover 211.

The end cover 211 is used as the conductive member, and the tab 222 is directly electrically connected to the end cover 211, thereby outputting or inputting the electrical energy of the battery cell 20 through the end cover 211.

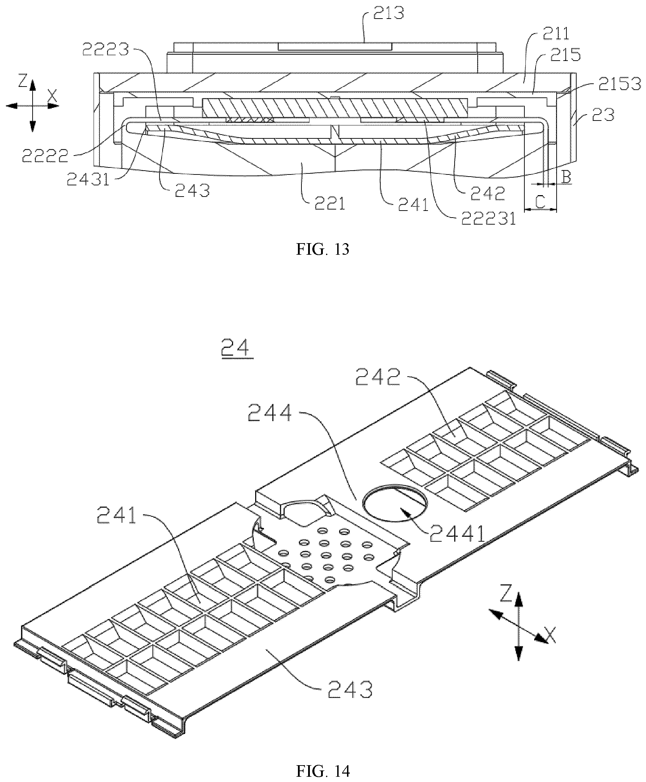

Referring to FIGS. 11, 12, and 13, FIG. 11 is a schematic top view of the battery cell 20 provided in some other embodiments of the present application. FIG. 12 is a sectional view at position H-H shown in FIG. 11. FIG. 13 is a sectional view at position I-I shown in FIG. 12. In some other embodiments, the battery cell 20 includes a casing 23, an end cover 211, and an electrode terminal 213. The casing 23 has an opening, the electrode assembly 22 is accommodated within the casing 23, and the end cover 211 closes the opening. The electrode terminal 213 is arranged on the end cover 211, and the electrode terminal 213 is the conductive member.

By using the electrode terminal 213 as a conductive member, the tab 222 is connected to the electrode terminal 213, and the electrical energy of the battery cell 20 is output or input through the electrode terminal 213.

It should be noted that two tabs 222 with opposite polarities can respectively use the end cover 211 and the electrode terminal 213 as conductive members. For example, the negative electrode tab can be directly connected to the end cover 211 and use the end cover 211 as the conductive member, while the positive electrode tab can be directly connected to the electrode terminal 213 and use the electrode terminal 213 as a conductive member.

Refer to FIGS. 3, 4, 5, 6, and 7 again. In some embodiments, the battery cell 20 includes a casing 23, an end cover 211, an electrode terminal 213 and a current collector component 25. The casing 23 has an opening, the electrode assembly 22 is accommodated within the casing 23, and the end cover 211 closes the opening. The electrode terminal 213 is arranged on the end cover 211. The current collector component 25 is electrically connected to the electrode terminal 213, and the current collector component 25 is the conductive member.

The current collector component 25 connects the part of the tab 222 located on the side of the support member 24 facing away from the main body part 221 and the electrode terminal 213, to electrically connect the tab 222 to the electrode terminal 213.

The current collector component 25 is used as the conductive member, with the tab 222 connected to the current collector component 25 and the current collector component 25 connected to the electrode terminal 213, which outputs or inputs the electrical energy of the battery cell 20 through the electrode terminal 213.

In some embodiments, the support member 24 abuts against the main body part 221.

The support member 24 abuts against the main body part 221, which means that the surface of the support member 24 facing the main body part 221 is attached to the surface of the main body part 221 facing the support member 24. The surface of the support member 24 facing the main body part 221 can only be in contact with the surface of the main body part 221 facing the support member 24, or it can be in contact with the surface of the main body part 221 facing the support member 24 and have a force applied therebetween.

The support member 24 abuts against the main body part 221 and avoids the area of the tab 222 of the main body part 221, so that the support member 24 does not abut against the tab 222, thereby reducing the risk of damage to the tab 222.

By abutting the support member 24 against the main body part 221, on the one hand, there is no gap between the support member 24 and the main body part 221, which is conducive to fully utilizing the internal space of the battery cell 20 and improving the energy density of the battery cell 20. On the other hand, during the process of switching the cell from upright to inverted, the relative position between the support member 24 and the main body part 221 will not change, and the main body part 221 will not collide with the support member 24, which is less likely to cause damage to the electrode assembly 22 and is beneficial for improving the lifespan of the battery cell 20.

In some embodiments, along the second direction, the length of the support member 24 abutting against the electrode assembly 22 is less than or equal to the length of the area on the electrode assembly 22 without the tab 222.

Referring to FIG. 13, in some embodiments, the support member 24 is located between two opposite tabs 222 in the second direction, and the support member 24 abuts against the area located between the above two tabs 222 of the main body part 221.

Referring to FIG. 13, in some embodiments, the electrode assembly 22 includes n electrode units, and the two sub-tabs of the two adjacent electrode units are combined to form one tab 222. Along the second direction, the size of the electrode unit is D, and along the second direction, the length where the support member 24 abuts against the electrode assembly 22 is L1. Along the second direction, if the length of the area of the electrode unit without tab 222 is 0.5D, it satisfies L1≤0.5nD. In the above, n is an integer and greater than 0.

If the support member 24 abuts against at least y electrode units, it meets: L1≤0.5yD, where y≤n, and y is an integer and greater than 0.

Taking the embodiment shown in FIG. 13 as an example, the electrode assembly 22 includes four electrode units, and then n=4. The support member 24 abuts against two electrode units, and then y=2. Along the second direction, the length L1 where the support member 24 abuts against the electrode assembly 22 meets L1≤0.5yD=0.5×2×D=D.

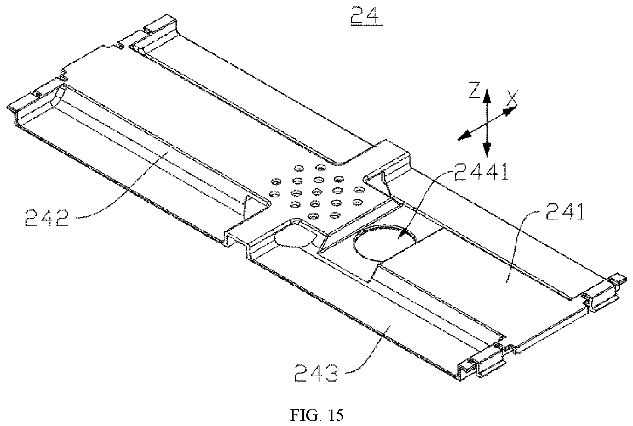

Referring to FIGS. 14 and 15, FIG. 14 is a schematic view of the front-side structure of battery cell 20 provided in some embodiments of the present application. FIG. 15 is a schematic view of the reverse-side structure of the battery cell 20 provided in some embodiments of the present application. The support member 24 has a body part 241, a connecting part 242, and a wing part 243. The body part 241 abuts against the main body part 221, and the tab 222 is bent around the wing part 243. The connecting part 242 connects the body part 241 and the wing part 243. In the first direction, the surface of the wing part 243 facing the main body part 221 is further away from the main body part 221 compared to the surface of the body part 241 facing the main body part 221.

The body part 241 is the part closest to the electrode assembly 22 on the support member 24. The body part 241 abuts against the electrode assembly 22.

The wing part 243 is a part of the support member 24 used for the tab 222 to be wound. Optionally, both the body part 241 and the wing part 243 are in a plate shape. The plate-shaped body part 241 can provide good support for the main body part 221 when the cell is inverted. The plate-shaped wing part 243 is designed to facilitate the bending of the tab 222 around it.

The connecting part 242 is a part on the support member 24 used to connect the body part 241 and the wing part 243.

In the first direction, the surface of the wing part 243 facing the main body part 221 is further away from the main body part 221 compared to the surface of the body part 241 facing the main body part 221, which means that the surface of the body part 241 facing the main body part 221 is closer to the main body part 221 compared to the surface of the wing part 243 facing the main body part 221.

By bending the tab 222 of the electrode assembly 22 around the wing part 243, in the scenario of the cell being inverted, the body part 241 supports the main body part 221 of the electrode assembly 22, thereby making it difficult for the weight of the main body part 221 of the electrode assembly 22 to be transmitted to the tab 222, making it difficult for the tab 222 to fork and insert inside, and improving the safety of the battery cell 20. Since along the thickness direction of the end cover 211, the surface of the wing part 243 facing the main body part 221 is further away from the main body part 221 compared to the surface of the body part 241 facing the main body part 221, there is an accommodating space formed between the wing part 243 and the main body part 221, which is configured for the tab 222 to extend out, so as to make a good shaping effect on the tab 222, thereby making it difficult for the tab 222 to fork and insert inside, and improving the safety of the battery cell 20.

In some embodiments, the end cover 211 is provided with a liquid injection hole 212, and the support member 24 also includes a liquid injection platform 244. The liquid injection platform 244 is arranged on the side of the body part 241 that is away from the electrode assembly 22 in the first direction and extends to the wing part 243 in the second direction, so that the surface of the liquid injection platform 244 that is away from the electrode assembly 22 in the first direction is flush with the surface of the wing part 243 that is away from the electrode assembly 22 in the first direction. The liquid injection platform 244 is provided with a through hole 2441, and the position of the through hole 2441 corresponds to the position of the liquid injection hole 212. Optionally, the through hole 2441 is coaxial with the liquid injection hole 212. When injecting liquid to battery cell 20, the electrolyte enters through the liquid injection hole 212, passes through the through hole 2441, and then enters the interior of the casing 23.

In some embodiments, a weight reduction groove is provided on the position, corresponding to the liquid injection platform 244, of the side of the body part 241 facing the electrode assembly 22, and the weight reduction groove can extend into the liquid injection platform 244. By setting a weight reduction groove, the weight of support member 24 can be reduced and the weight of battery cell 20 can be reduced.

Refer to FIGS. 3, 4, 5, 6, and 7. In some embodiments, the tab 222 also includes a first connecting part 2221 and a second connecting part 2223, the bent part 2222 connects the first connecting part 2221 and the second connecting part 2223. The first connecting part 2221 is connected to the main body part 221. In the first direction, the first connecting part 2221 and the second connecting part 2223 are respectively located on two sides of the support member 24. The second connecting part 2223 has the fixed area 22231 connected to the conductive member. In the second direction, along a direction from the bent part 2222 towards the support member 24, the second connecting part 2223 does not exceed the connection position between the body part 241 and the connecting part 242.

Since the body part 241 is connected to the wing part 243 by the connecting part 242, there is a height difference between the surface of the body part 241 facing away from the main body part 221 and the surface of the wing part 243 facing away from the main body part 221. If, along the second direction, the second connecting part 2223 extends beyond the connection position between the body part 241 and the connecting part 242 along the direction in which the bent part 2222 points toward the support member 24, the second connecting part 2223 is susceptible to bending, thereby increasing the risk of damage to the second connecting part 2223.

The embodiment of the present application also provides a battery 100, which includes a box 10 and the above battery cell 20. The battery cell 20 is accommodated within the box 10.

The embodiment of the present application also provides an electrical equipment, which includes the battery 100 mentioned above, and the battery 100 is configured to provide electrical energy.

According to some embodiments of the present application, FIGS. 3-13 are referred to.

The embodiment of the present application provides a battery cell 20, which includes an electrode assembly 22, a support member 24, and a conductive member. The electrode assembly 22 has a main body part 221 and a tab 222, and along the first direction, the tab 222 protrudes from one end of the main body part 221. The tab 222 is bent around the support member 24. In the second direction, the tab 222 includes a bent part 2222 located on one side of the support member 24, and the second direction is perpendicular to the first direction. The conductive member is connected to the tab 222. The tab 222 also includes a fixed area 22231 connected to the conductive member. In the first direction, the fixed area 22231 is located on the side of the support member 24 facing away from the main body part 221. Along the second direction, the support member 24 has a first end face 2431 facing the bent part 2222, and the first end face 2431 is located between the fixed area 22231 and the bent part 2222. The battery cell 20 is provided therein with a support member 24, and the tab 222 is bent around the support member 24. The fixed area 22231 of the tab 222 connected to the conductive member is located on the side of the support member 24 facing away from the main body part 221 in the first direction, and the first end face 2431 is located between the fixed area 22231 and the bent part 2222 in the second direction. In the scenario of the cell being inverted, the support member 24 can support the electrode assembly 22. This makes it difficult for the weight of the main body part 221 of the electrode assembly 22 to be transmitted to the tab 222, thereby enabling the support member 24 to provide good support effect for the tab 222, making it difficult for the tab 222 to fork and insert inside, and improving the safety of the battery cell 20.

The battery cell 20 includes a casing 23, an end cover 211, and an insulating member 215. The casing 23 has an opening, the electrode assembly 22 is accommodated within the casing 23, and the end cover 211 closes the opening. The insulating member 215 is located on the side of the end cover 211 facing the electrode assembly 22, and is configured to insulate and isolate the tab 222 and the end cover 211. The insulating member 215 has a concave part 2151 on one side facing the electrode assembly 22, and the support member 24 is at least partially accommodated within the concave part 2151. There is a gap between the first end face 2431 and the side wall surface 2152 of the concave part 2151, which is used for the bent part 2222 to pass through. Along the second direction, the minimum width of the gap is A, and the thickness of the bent part 2222 is B, which meets A≥B+1mm.

The concave part 2151 is formed on the side of the insulating member 215 facing the electrode assembly 22, and the support member 24 is at least partially accommodated in the concave part 2151, so as to reduce the occupation of the internal space of the casing 23 by the support member 24, which is conducive to improving the energy density of the battery cell 20. Due to the gap between the first end face 2431 and the side wall surface 2152 of the concave part 2151, it is convenient for the tab 222 to pass through the gap and wrap towards the side of the support member 24 facing away from the main body part 221. The difference between the minimum width of the gap along the second direction and the thickness of the bent part 2222 along the second direction is greater than or equal to 1mm. In this way, there is a sufficient gap between the first end face 2431 and the side wall surface 2152 of the concave part 2151 for the bent part 2222 to pass through, thereby making it difficult for the bent part 2222 to contact the first end face 2431 or the side wall surface 2152 of concave part 2151, and enabling the bent part 2222 to be less susceptible to stress from the first end face 2431 or the side wall surface 2152 of concave part 2151, which is not easy to cause damage to the tab 222. If A<B+1mm, the width of the gap is small, and the tab 222 is easily affected by the stress of the first end face 2431 or the side wall surface 2152 of concave part 2151, which can damage the tab 222.

The above is only preferred embodiments of the present application and is not intended to limit it. For those skilled in the art, the present application may undergo various modifications and variations. Any modifications, equivalent replacements, improvements, etc. made within the spirit and principles of the present application shall be included within the scope of protection of the present application.

## Claims

1. A battery cell, comprising:
an electrode assembly, provided with a main body part and a tab, wherein along a first direction, the tab protrudes from one end of the main body part;
a support member, wherein:
the tab is bent around the support member,
in a second direction, the tab comprises a bent part located on one side of the support member, and
the second direction is perpendicular to the first direction; and
a conductive member, connected to the tab, wherein:
the tab further comprises a fixed area connected to the conductive member,
along the first direction, the fixed area is located on one side of the support member facing away from the main body part, and
along the second direction, the support member has a first end face facing the bent part, and the first end face is located between the fixed area and the bent part.

2. The battery cell according to claim 1, wherein the battery cell comprises:
a casing, having an opening, wherein the electrode assembly is accommodated within the casing;
an end cover, closing the opening; and
an insulating member, located on one side of the end cover facing the electrode assembly, wherein:
the insulating member is configured to insulate and isolate the tab and the end cover,
a concave part is formed on one side of the insulating member facing the electrode assembly,
the support member is at least partially accommodated within the concave part;
a gap is provided between the first end face and a side wall surface of the concave part, and
the gap is configured to enable the bent part to pass through.

3. The battery cell according to claim 2, wherein along the second direction, a minimum width of the gap is A, and a thickness of the bent part is B, which meets A≥B+1mm.

4. The battery cell according to claim 1, wherein the battery cell comprises:
a casing, having an opening, wherein the electrode assembly is accommodated within the casing;
an end cover, closing the opening; and
an insulating member, located on one side of the end cover facing the electrode assembly, wherein:
the insulating member is configured to insulate and isolate the tab and the end cover,
in the second direction, the insulating member has a second end face, and
the first end face is located between the fixed area and the second end face.

5. The battery cell according to claim 4, wherein along the second direction, the bent part is located between the first end face and the second end face, a distance between the first end face and the second end face is C, and a thickness of the bent part is B, which meets C ≥ B+1 mm.

6. The battery cell according to any one of claims 1-5, wherein:
the tab further comprises a first connecting part and a second connecting part;
the bent part connects the first connecting part and the second connecting part, the first connecting part is connected to the main body part;
along the first direction, the first connecting part and the second connecting part are respectively located on two sides of the support member; and
the second connecting part has the fixed area connected to the conductive member.

7. The battery cell according to any one of claims 1-6, wherein the electrode assembly has two tabs, and the two tabs are bent respectively around two sides of the support member along the second direction.

8. The battery cell according to any one of claims 1-7, wherein the battery cell comprises:
a casing, having an opening, wherein the electrode assembly is accommodated within the casing; and
an end cover, closing the opening, wherein the end cover is the conductive member.

9. The battery cell according to any one of claims 1-7, wherein the battery cell comprises:
a casing, having an opening, wherein the electrode assembly is accommodated within the casing;
an end cover, closing the opening; and
an electrode terminal, arranged on the end cover, wherein the electrode terminal is the conductive member.

10. The battery cell according to any one of claims 1-7, wherein the battery cell comprises:
a casing, having an opening, wherein the electrode assembly is accommodated within the casing;
an end cover, closing the opening;
an electrode terminal, arranged on the end cover; and
a current collector component, electrically connected to the electrode terminal, wherein the current collector component is the conductive member.

11. The battery cell according to any one of claims 1-10, wherein the support member abuts against the main body part.

12. The battery cell according to claim 11, wherein:
the support member has a body part, a connecting part, and a wing part;
the body part abuts against the main body part;
the tab is bent around the wing part;
the connecting part connects the body part and the wing part, and
along the first direction, a surface of the wing part facing the main body part is further away from the main body part compared to a surface of the body part facing the main body part.

13. The battery cell according to claim 12, wherein:
the tab further comprises a first connecting part and a second connecting part;
the bent part connects the first connecting part and the second connecting part;
the first connecting part is connected to the main body part;
along the first direction, the first connecting part and the second connecting part are respectively located on two sides of the support member;
the second connecting part has the fixed area connected to the conductive member; and
in the second direction, along a direction from the bent part towards the support member, the second connecting part does not exceed a connection position between the body part and the connecting part.

14. A battery, comprising:
a box; and
the battery cell according to any one of claims 1-13, wherein the battery cell is accommodated in the box.

15. An electrical equipment, comprising the battery according to claim 14, wherein the battery is configured to provide electric energy.
